# FASCICULE DE BREVET EUROPEEN

(11) **EP 4 251 390 B1**
(45) Date de publication et mention de la délivrance du brevet: **01.01.2025**
(21) Numéro de dépôt: 21815249.4
(22) Date de dépôt: 08.11.2021
(51) Int. Cl.: B29B 11/16, D03D 25/00, F01D 5/28, B29L 31/08

(54) **PREFORME FIBREUSE D'UN PROFIL AERODYNAMIQUE D'AUBE DE TURBOMACHINE**
FASERVORFORMLING FÜR DAS AERODYNAMISCHE PROFIL EINER TURBOMASCHINENSCHAUFEL
FIBROUS PREFORM FOR THE AERODYNAMIC PROFILE OF A TURBOMACHINE BLADE

(30) Priorité: 25.11.2020 FR 2012109
(43) Date de publication de la demande: 04.10.2023
(73) Titulaire: Safran Ceramics, 33185 Le Haillan (FR)
(72) Inventeur: ROUSSILLE, Clément, Marie, Benoît, 77550 Moissy-Cramayel (FR); GIMAT, Matthieu, Arnaud, 77550 Moissy-Cramayel (FR); MATEO, Julien, André, Roger, 77550 Moissy-Cramayel (FR)
(74) Mandataire: Cabinet Beau de Loménie
(86) Numéro de dépôt international: PCT/FR2021/051970
(87) Numéro de publication internationale: WO 2022/112678

(56) Documents cités:
- WO-A1-2012/001279
- WO-A1-2015/004362
- FR-A1- 2 954 271

## Description

### Domaine Technique

L'invention concerne une préforme fibreuse d'un profil aérodynamique d'aube de turbomachine, et en particulier d'une aube de distributeur de turbine. Ces aubes peuvent être destinées à être intégrées dans les turbomachines aéronautiques ou industrielles.

### Technique antérieure

Les distributeurs de turbine sont des pièces liées au carter d'un turboréacteur permettant de canaliser et d'orienter les gaz du flux primaire. Un étage de turbine est constitué d'un aubage fixe appelé « distributeur » (ou stator), suivi d'un aubage mobile ou rotor (ensemble du disque de turbine et des aubes mobiles). Les distributeurs de turbine sont réalisés avec des aubes à pales creuses, c'est-à-dire avec des pales présentant un passage longitudinal interne sur toute leur longueur entre leurs extrémités extérieure et intérieure. De tels passages permettent d'acheminer un flux d'air de l'extérieur vers l'intérieur, notamment pour le refroidissement de disques de roues mobiles de turbine.

Les matériaux composites à matrice céramique (« matériaux CMC ») ont été proposés comme éléments de partie chaude de turbomachine. En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Le distributeur est soumis à des efforts liés au flux aérodynamique dans la veine et à l'effet piston sur le carter sous le distributeur (différence de pression entre les cavités amont et aval sous le distributeur). Ces efforts créent un moment autour de la fixation entre le distributeur et le carter.

Les aubes de distributeur doivent faire cheminer les efforts par des zones assurant une tenue structurale suffisante tout en présentant une forme relativement complexe permettant d'assurer différentes fonctions, comme notamment l'orientation et la distribution du flux de gaz aux étages avals (profil aérodynamique de la pale), le guidage des flux par les veines supérieure et inférieure (plateformes) et l'alimentation du carter intérieur en en air de refroidissement. On connaît également FR 2 954 271 qui divulgue une pale d'hélice d'aéronef.

Il serait souhaitable de disposer d'une aube de turbomachine permettant d'assurer, de manière satisfaisante, la tenue aux efforts exercés ainsi que les fonctions souhaitées.

### Exposé de l'invention

L'invention concerne une préforme fibreuse d'un profil aérodynamique creux d'aube de turbomachine, la préforme étant réalisée en une seule pièce et ayant successivement le long d'une direction axiale une première partie aval définissant un bord de fuite de l'aube, une deuxième partie intermédiaire définissant un intrados et un extrados de l'aube et une troisième partie amont définissant un bord d'attaque de l'aube,
la préforme fibreuse étant caractérisée en ce que (i) la première partie aval est formée par une première texture fibreuse présentant un tissage tridimensionnel, en ce que (ii) la deuxième partie intermédiaire et la troisième partie amont sont formées par des deuxièmes et troisième textures fibreuses déliées et s'étendant à partir de la première texture fibreuse, les deuxième et troisième textures fibreuses présentant chacune un tissage tridimensionnel, et en ce que (iii) une partie de la deuxième ou troisième texture fibreuse déliée est repliée sur la troisième ou deuxième texture fibreuse déliée de sorte à recouvrir celle-ci, cette partie repliée étant obtenue par tissage tridimensionnel.

La préforme fibreuse présente un bon compromis entre tenue structurale et diversité de cambrures atteignables pour le profil. La préforme fibreuse, formée en une seule pièce, présente un renfort textile continu, avantageux du point de vue de la tenue structurale. En outre, le bord de fuite, formé par une même texture obtenue par tissage tridimensionnel, confère une tenue structurale améliorée par rapport à un bord de fuite formé en superposant deux textures fibreuses en évitant la génération d'une zone adhésive. Le repli de la partie de l'une des deuxième ou troisième texture sur l'autre des deuxième ou troisième texture permet d'atteindre davantage de cambrures possibles pour le profil en autorisant d'importantes différences de longueurs développées entre l'intrados et l'extrados.

Dans un exemple de réalisation, la préforme fibreuse est une préforme d'aube de distributeur de turbine, la première partie aval présentant une déliaison dans une direction radiale depuis une partie de pale formant deux portions fibreuses déliées et s'étendant à partir de la partie de pale, lesdites portions fibreuses définissant un renfort fibreux d'une plateforme de l'aube et les deuxième et troisième textures fibreuses déliées étant prolongées dans la direction radiale par les portions fibreuses déliées.

Dans un exemple de réalisation, les deuxième et troisième textures fibreuses déliées sont drapées l'une sur l'autre de sorte à se recouvrir au moins sur le bord d'attaque. En variante, les deuxième et troisième textures fibreuses déliées sont drapées l'une sur l'autre de sorte à se recouvrir dans une zone distincte du bord d'attaque. L'invention vise également une aube de turbomachine en matériau composite à matrice céramique comprenant une préforme fibreuse telle que décrite plus haut, et une matrice céramique présente dans la porosité de la préforme fibreuse. L'invention vise également un procédé de fabrication d'une préforme fibreuse telle que décrite plus haut, comprenant au moins :
- le tissage d'une ébauche fibreuse en une seule pièce comprenant au moins (i) la formation de la première partie aval par tissage tridimensionnel de la première texture fibreuse, et (ii) la réalisation d'une déliaison dans la direction axiale depuis la première partie aval de sorte à former les deuxième et troisième textures fibreuses déliées s'étendant à partir de la première texture fibreuse, et
- la formation de la préforme fibreuse par positionnement de l'ébauche autour d'une forme et drapage des deuxième et troisième textures fibreuses déliées l'une sur l'autre de sorte à ce qu'elles se recouvrent.

Dans un exemple de réalisation, le tissage de l'ébauche comprend en outre la réalisation d'une déliaison dans la direction radiale depuis la partie de pale de la première partie aval afin de former les portions fibreuses déliées définissant le renfort fibreux de la plateforme de l'aube, les deuxième et troisième textures fibreuses déliées étant prolongées dans la direction radiale par les portions fibreuses déliées, une préforme fibreuse d'aube de distributeur étant obtenue après positionnement de l'ébauche autour de la forme et drapage des deuxième et troisième textures fibreuses déliées.

### Brève description des dessins

[Fig. 1] La figure 1 représente, de manière schématique, un exemple de préforme fibreuse selon l'invention vue en coupe dans un plan transverse à la direction radiale et au niveau d'une partie de pale.
[Fig. 2] La figure 2 représente, de manière schématique et à plat, l'ébauche fibreuse avant mise en forme pour former la préforme fibreuse de la figure 1 vue de deux côtés différents.
[Fig. 3] La figure 3 représente, de manière schématique, la préforme fibreuse de la figure 1 en vue en coupe dans un plan transverse à la direction axiale et au niveau de la première partie aval.
[Fig. 4] La figure 4 représente, de manière schématique, la préforme fibreuse de la figure 1 en vue en coupe dans un plan transverse à la direction axiale et au niveau de la deuxième partie intermédiaire.
[Fig. 5] La figure 5 représente, de manière schématique, la préforme fibreuse de la figure 1 en vue en coupe dans un plan transverse à la direction axiale et au niveau de la troisième partie amont.
[Fig. 5A] La figure 5A représente, de manière schématique, une variante d'ébauche fibreuse destinée à former une préforme fibreuse selon l'invention.
[Fig. 6] La figure 6 représente, de manière schématique, un autre exemple de préforme fibreuse selon l'invention vue en coupe dans un plan transverse à la direction radiale et au niveau d'une partie de pale.
[Fig. 7] La figure 7 représente, de manière schématique, un autre exemple de préforme fibreuse selon l'invention vue en coupe dans un plan transverse à la direction radiale et au niveau d'une partie de pale.
[Fig. 8] La figure 8 représente, de manière schématique, un autre exemple de préforme fibreuse selon l'invention vue en coupe dans un plan transverse à la direction radiale et au niveau d'une partie de pale.

### Description des modes de réalisation

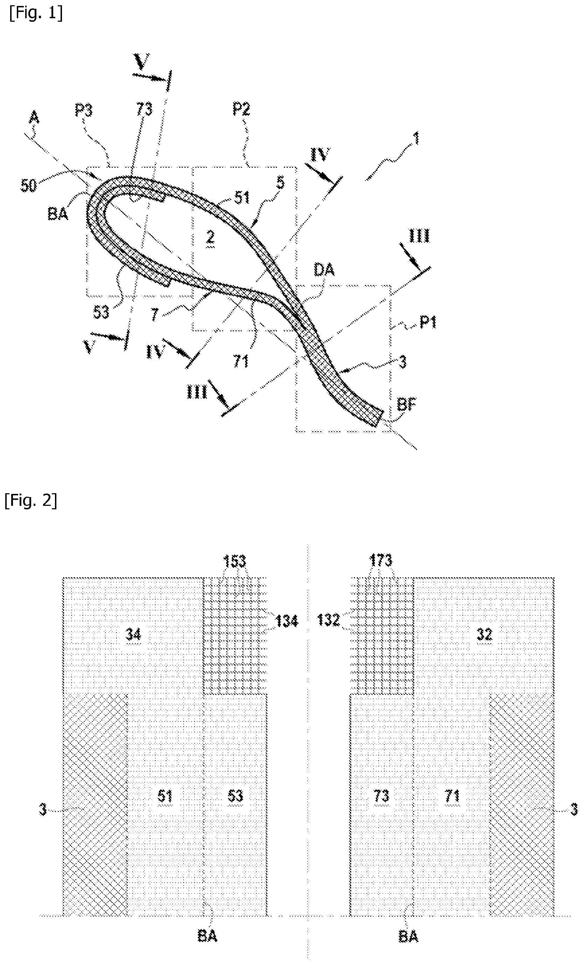

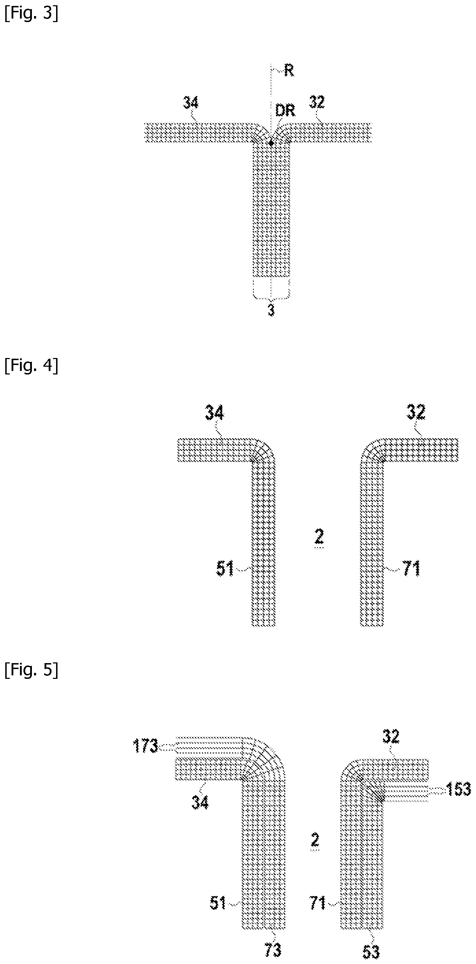

La figure 1 est une vue dans un plan transverse à la direction radiale R, cette direction étant représentée sur la figure 3, prise au niveau de la partie de pale d'une préforme fibreuse 1 d'aube de distributeur de turbine. La préforme fibreuse 1 est destinée à former le renfort fibreux de l'aube.

La préforme 1 présente successivement le long de la direction axiale A une première partie P1 aval définissant un bord de fuite BF de l'aube, une deuxième partie P2 intermédiaire définissant un intrados et un extrados de l'aube et une troisième partie amont P3 définissant un bord d'attaque BA de l'aube.

La direction axiale A correspond à la direction d'écoulement du flux gazeux dans la veine dans laquelle l'aube est destinée à être montée. La direction radiale R correspond à la direction selon un rayon de la partie de la turbomachine dans laquelle l'aube est destinée à être montée (droite reliant le centre de cette partie à sa périphérie). La direction radiale correspond à la direction selon la hauteur de l'aube. Ici, la direction radiale R correspond à la direction selon un rayon du distributeur de turbine.

Sur une partie de pale, la première partie P1 est formée par une seule première texture fibreuse 3 obtenue par tissage tridimensionnel. Dans l'exemple illustré, la première texture fibreuse 3 se prolonge, au-delà de la partie de pale dans la direction radiale R, pour former deux portions fibreuses déliées 32 et 34 définissant un renfort fibreux d'une plateforme de l'aube, ici la plateforme extérieure (voir figures 2 et 3). Dans la première partie P1, une première déliaison, notée DR, est réalisée dans la direction radiale R afin de scinder la première texture 3 en deux portions fibreuses déliées 32 et 34. Les portions fibreuses déliées 32 et 34 sont chacune obtenues par tissage tridimensionnel. Les portions fibreuses 32 et 34 sont dans la continuité textile de la première texture 3. Une structure similaire, non illustrée, peut être reprise pour former le renfort fibreux de la plateforme intérieure. Les termes « intérieur » et « extérieur » sont utilisés par rapport à la direction radiale R. De façon connue en soi, une déliaison est réalisée entre deux couches de fils de chaîne en ne faisant pas transiter des fils de trame à travers la zone de déliaison pour ne pas lier des fils de couches de chaînes situées de part et d'autre de la déliaison. Dans tout le texte, les rôles entre fils de chaîne et fils de trame sont interchangeables.

Une deuxième déliaison DA, réalisée dans la direction axiale A, est présente dans la partie de pale afin de former à partir de la première texture 3 des deuxième et troisième textures fibreuses déliées 5 et 7. Les deuxième et troisième textures fibreuses déliées 5 et 7 sont chacune obtenues par tissage tridimensionnel. La deuxième texture déliée 5 forme l'extrados de l'aube et la troisième texture déliée 7 l'intrados de l'aube. Les deuxième et troisième textures déliées 5 et 7 s'étendent dans la continuité textile de la première texture 3. Les deuxième et troisième textures déliées 5 et 7 comprennent ici chacune une première portion 51 et 71 qui s'étend de la déliaison DA jusqu'au bord d'attaque BA. Chaque première portion 51 et 71 est obtenue par tissage tridimensionnel. Les portions fibreuses 32 et 34 formant le renfort de la plateforme s'étendent dans la continuité textile des premières portions 51 et 71 dans la direction radiale R. La figure 4 est une vue en coupe de la deuxième partie P2 prise transversalement à la direction axiale A et illustre ce point.

Les deuxième et troisième textures fibreuses déliées 5 et 7 sont drapées l'une sur l'autre de sorte à se recouvrir. Le recouvrement des deuxième 5 et troisième 7 textures fibreuses peut avoir lieu sur la troisième partie P3 amont, comme dans l'exemple illustré. Les deuxième 5 et troisième 7 textures fibreuses se recouvrent ici au moins sur le bord d'attaque BA mais on ne sort pas du cadre de l'invention lorsqu'elles se recouvrent sur une zone distincte du bord d'attaque, comme il sera illustré dans la suite. L'une des deuxième et troisième textures fibreuses 5 ou 7 est ici enroulée autour de l'autre des deuxième et troisième textures fibreuses 7 ou 5 dans la troisième partie amont P3. Dans l'exemple, la deuxième texture fibreuse 5 est enroulée autour de la troisième texture fibreuse 7 mais l'inverse peut être réalisé. La partie 50 de l'une des deuxième et troisième textures fibreuses 5 ou 7 drapée sur l'autre des deuxième et troisième textures fibreuses 7 ou 5 et la recouvrant est obtenue par tissage tridimensionnel.

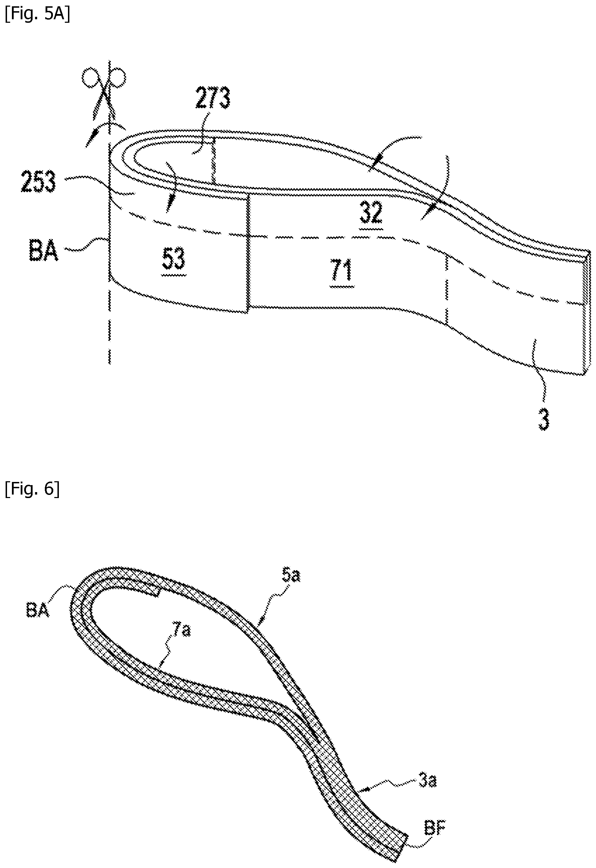

Dans l'exemple illustré, les deuxième et troisième textures fibreuses déliées 5 et 7 s'étendent au-delà du bord d'attaque BA et présentent, à partir du bord d'attaque BA, une deuxième portion 53 et 73. Chaque deuxième portion 53 et 73 est obtenue par tissage tridimensionnel. La deuxième portion 53 ou 73 est dans la continuité textile de la première portion 51 et 71. Dans l'exemple illustré, les première 51 et deuxième 53 portions forment une partie 50 de la deuxième texture fibreuse 5 déliée qui est repliée sur la troisième texture fibreuse 7 déliée de sorte à la recouvrir, cette partie repliée étant obtenue par tissage tridimensionnel. En revanche et à la différence de la première portion 51 et 71, le prolongement des deuxièmes portions 53 et 73 au niveau de la plateforme peut ne pas être tissé. Ainsi et comme illustré aux figures 2 et 5, des couches unidirectionnelles 153 et 173 de premiers fils non tissés s'étendent dans le prolongement de la deuxième portion 53 et 73 le long de la direction radiale R. De manière similaire, des couches unidirectionnelles 134 et 132 de deuxièmes fils non tissés s'étendent dans le prolongement le long de la direction axiale A de chaque portion fibreuse 32 et 34. Les couches unidirectionnelles 153 ou 173 de l'une des deuxième et troisième textures fibreuses 5 ou 7 sont en regard de la portion fibreuse 32 ou 34 de l'autre des deuxième et troisième textures fibreuses 7 ou 5 dans la troisième portion amont P3 (figure 5). On a représenté à la figure 5A une variante qui diffère de la figure 2 par la présence de zones tissées 253 et 273 à la place des zones non tissées formées par les couches unidirectionnelles 132, 134, 153 et 173. Dans ce cas, une découpe le long du bord d'attaque BA en zone hors veine permet de rabattre les renforts de plateforme, comme illustré.

La préforme fibreuse 1 définit un profil aérodynamique creux de l'aube. La préforme fibreuse 1 comprend ainsi un passage longitudinal 2 interne s'étendant le long de la direction radiale R. Dans l'exemple illustré relatif à une aube de distributeur le passage longitudinal 2 interne est destiné à être traversé par le flux d'air de refroidissement. Le passage longitudinal 2 peut recevoir un mât métallique permettant de reprendre les efforts mécaniques. L'intrados et l'extrados délimitent le passage longitudinal 2. Le passage longitudinal 2 est présent entre l'intrados et l'extrados.

Les fils formant la préforme fibreuse 1 peuvent être en céramique, notamment en carbure de silicium (SiC), ou en carbone.

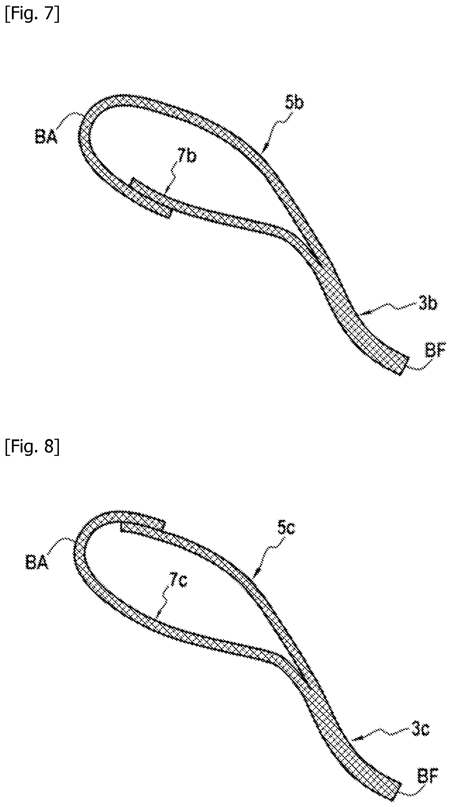

La texture qui est enroulée autour de l'autre texture peut s'arrêter sur l'intrados ou l'extrados. On a représenté à la figure 6 une variante où la première texture fibreuse 3a est déliée en une deuxième 5a et une troisième 7a textures fibreuses, la deuxième texture 5a étant repliée sur la troisième texture 7a et s'étendant jusqu'au bord de fuite BF. Les figures 7 et 8 illustrent des variantes où la première texture fibreuse 3b, 3c est déliée en une deuxième 5b, 5c et une troisième 7b, 7c textures fibreuses avec drapage et recouvrement des deuxième et troisième textures fibreuses sur l'intrados ou l'extrados et dans une zone distincte du bord d'attaque BA. On peut prolonger dans une variante non illustrée la texture repliée 5b, 7c des exemples des figures 7 et 8 jusqu'au bord de fuite BF. Selon une autre variante non illustrée, le recouvrement entre les deuxième et troisième textures fibreuses déliées 5 ou 7 s'arrête au bord d'attaque BA (les textures déliées sont dépourvues des deuxièmes portions 53 et 73 s'étendant au-delà du bord d'attaque).

Pour former la première préforme fibreuse 1, on peut d'abord réaliser une ébauche fibreuse par tissage tridimensionnel à partir de fils en céramique, notamment en carbure de silicium (SiC), ou en carbone. L'ébauche fibreuse est réalisée en une seule pièce et comprend la formation de la première texture fibreuse 3 par tissage tridimensionnel dans la première partie aval avec réalisation de la déliaison DA dans la direction axiale A de sorte à former les deuxième et troisième textures fibreuses déliées 5 et 7 et réalisation de la déliaison DR dans la direction radiale R de sorte à former les deux portions fibreuses déliées 32 et 34. Le tissage au niveau des portions fibreuses déliées 32 et 34 est ensuite arrêté dans la zone destinée à s'étendre au-delà du bord d'attaque BA après mise en forme.

L'ébauche est ensuite mise en forme autour d'une forme en drapant une texture déliée 5 ou 7 autour de l'autre texture déliée 7 ou 5 au moins au niveau du bord d'attaque BA dans le cas de l'exemple de la figure 1 notamment et en rabattant les portions fibreuses déliées 32 et 34 au niveau de la déliaison DR pour former le renfort de plateforme.

Les couches unidirectionnelles de fils 153, 173, 134 et 132 peuvent ensuite être découpées puis on peut procéder à la formation de la matrice dans la porosité de la préforme fibreuse ainsi obtenue.

La matrice peut être formée, en tout ou partie, par infiltration chimique en phase vapeur, ou par voie liquide. La technique de voie liquide peut être une infiltration à l'état fondu (« Melt-Infiltration » ; « MI ») ou une technique d'imprégnation et de pyrolyse de polymère (« Polymer Imprégnation Pyrolysis » ; « PIP »). La formation de la matrice céramique par les techniques évoquées est connue en soi. On notera que l'on peut utiliser une combinaison de ces techniques pour former la matrice. La matrice peut comporter du carbure de silicium, par exemple.

On obtient, après formation de la matrice, une aube fixe de distributeur de turbine d'une turbomachine, par exemple un turbomoteur aéronautique. L'aube est en matériau CMC et comprend une pale et des plateformes intérieure et extérieure. La face extérieure de la plateforme intérieure et la face intérieure de la plateforme extérieure sont destinées à délimiter la veine d'écoulement de gaz dans le distributeur après montage de l'aube dans le distributeur. On peut obtenir le distributeur de turbine en montant un ensemble d'aubes telles que décrites ci-avant dans un carter de turbine.

On a décrit le cas de la fabrication d'une aube de distributeur mais l'invention peut se généraliser à la formation d'un profil aérodynamique d'aube quelconque, par exemple d'aube mobile, ne comprenant pas nécessairement de plateforme. Auquel cas, on peut après obtention du profil aérodynamique creux, insérer dans la cavité un longeron formant partie de pied afin d'obtenir l'aube mobile.

## Revendications

1. Préforme fibreuse (1) d'un profil aérodynamique creux d'aube de turbomachine, la préforme étant réalisée en une seule pièce et ayant successivement le long d'une direction axiale (A) une première partie aval (P1) définissant un bord de fuite (BF) de l'aube, une deuxième partie (P2) intermédiaire définissant un intrados et un extrados de l'aube et une troisième partie (P3) amont définissant un bord d'attaque (BA) de l'aube,
la préforme fibreuse étant **caractérisée en ce que** (i) la première partie aval est formée par une première texture fibreuse (3 ; 3a ; 3b ; 3c) présentant un tissage tridimensionnel, **en ce que** (ii) la deuxième partie intermédiaire et la troisième partie amont sont formées par des deuxième et troisième textures fibreuses (5 ; 5a ; 5b ; 5c ; 7 ; 7a ; 7b ; 7c) déliées et s'étendant à partir de la première texture fibreuse, les deuxième et troisième textures fibreuses présentant chacune un tissage tridimensionnel, et **en ce que** (iii) une partie (50) de la deuxième ou troisième texture fibreuse déliée est repliée sur la troisième ou deuxième texture fibreuse déliée de sorte à recouvrir celle-ci, cette partie repliée étant obtenue par tissage tridimensionnel.

2. Préforme fibreuse (1) selon la revendication 1, dans laquelle la préforme fibreuse est une préforme d'aube de distributeur de turbine, dans laquelle la première partie aval (P1) présente une déliaison (DR) dans une direction radiale (R) depuis une partie de pale formant deux portions fibreuses (32 ; 34) déliées et s'étendant à partir de la partie de pale, lesdites portions fibreuses définissant un renfort fibreux d'une plateforme de l'aube et dans laquelle les deuxième et troisième textures fibreuses déliées (5 ; 5a ; 5b ; 5c ; 7 ; 7a ; 7b ; 7c) sont prolongées dans la direction radiale par les portions fibreuses déliées.

3. Préforme fibreuse selon la revendication 1 ou 2, dans laquelle les deuxième (5 ; 5a) et troisième (7 ; 7a) textures fibreuses déliées sont drapées l'une sur l'autre de sorte à se recouvrir au moins sur le bord d'attaque (BA).

4. Préforme fibreuse selon la revendication 1 ou 2, dans laquelle les deuxième (5b ; 5c) et troisième (7b ; 7c) textures fibreuses déliées sont drapées l'une sur l'autre de sorte à se recouvrir dans une zone distincte du bord d'attaque (BA).

5. Aube de turbomachine en matériau composite à matrice céramique comprenant une préforme fibreuse (1) selon l'une quelconque des revendications 1à 4, et une matrice céramique présente dans la porosité de la préforme fibreuse.

6. Procédé de fabrication d'une préforme fibreuse (1) selon la revendication 1 à 4, comprenant au moins :
- le tissage d'une ébauche fibreuse en une seule pièce comprenant au moins (i) la formation de la première partie aval (P1) par tissage tridimensionnel de la première texture fibreuse (3 ; 3a ; 3b ; 3c), et (ii) la réalisation d'une déliaison (DA) dans la direction axiale (A) depuis la première partie aval de sorte à former les deuxième et troisième textures fibreuses déliées (5 ; 5a ; 5b ; 5c ; 7 ; 7a ; 7b ; 7c) s'étendant à partir de la première texture fibreuse, et
- la formation de la préforme fibreuse par positionnement de l'ébauche autour d'une forme et drapage des deuxième et troisième textures fibreuses déliées l'une sur l'autre de sorte à ce qu'elles se recouvrent.

7. Procédé selon la revendication 6, dans lequel le tissage de l'ébauche comprend en outre la réalisation d'une déliaison (DR) dans la direction radiale (R) depuis la partie de pale de la première partie aval (P1) afin de former les portions fibreuses déliées (32 ; 34) définissant le renfort fibreux de la plateforme de l'aube, les deuxième et troisième textures fibreuses déliées (5 ; 5a ; 5b ; 5c ; 7 ; 7a ; 7b ; 7c) étant prolongées dans la direction radiale par les portions fibreuses déliées, et dans lequel une préforme fibreuse d'aube de distributeur est obtenue après positionnement de l'ébauche autour de la forme et drapage des deuxième et troisième textures fibreuses déliées.

## Patentansprüche

1. Faservorformling (1) eines hohlen aerodynamischen Profils einer Turbomaschinenschaufel, wobei der Vorformling aus einem einzigen Stück umgesetzt ist und entlang einer axialen Richtung (A) nacheinander einen ersten stromabwärtigen Teil (P1), der eine Hinterkante (BF) der Schaufel definiert, einen zweiten Zwischenteil (P2), der eine Druckseite und eine Saugseite der Schaufel definiert, und einen dritten stromaufwärtigen Teil (P3), der eine Vorderkante (BA) der Schaufel definiert, aufweist, wobei der Faservorformling **dadurch gekennzeichnet ist, dass** (i) der erste stromabwärtige Teil durch eine erste Fasertextur (3; 3a; 3b; 3c) mit einer dreidimensionalen Verwebung gebildet ist, und dass (ii) der zweite Zwischenteil und der dritte stromaufwärtige Teil durch zweite und dritte Fasertexturen (5; 5a; 5b; 5c; 7; 7a; 7b; 7c) gebildet sind, die entbunden sind und sich von der ersten Fasertextur ausgehend erstrecken, wobei die zweiten und dritten Fasertexturen jeweils eine dreidimensionale Verwebung aufweisen, und dass (iii) ein Teil (50) der zweiten oder dritten entbundenen Fasertextur über die dritte oder zweite entbundene Fasertextur gefaltet ist, um diese zu bedecken, wobei dieser gefaltete Teil durch dreidimensionales Verweben erhalten wird.

2. Faservorformling (1) nach Anspruch 1, wobei der Faservorformling ein Turbinenverteilerschaufelvorformling ist, bei dem der erste stromabwärtige Teil (P1) eine Entbindung (DR) in einer radialen Richtung (R) von einem Flügelteil ausgehend aufweist, der zwei Faserabschnitte (32; 34) bildet, die entbunden sind und sich von dem Flügelteil ausgehend erstrecken, wobei die Faserabschnitte eine Faserverstärkung einer Plattform der Schaufel definieren und wobei die zweiten und dritten entbundenen Fasertexturen (5; 5a; 5b; 5c; 7; 7b; 7c) in der radialen Richtung durch die entbundenen Faserabschnitte verlängert sind.

3. Faservorformling nach Anspruch 1 oder 2, wobei die zweiten (5; 5a) und dritten (7; 7a) entbundenen Fasertexturen zumindest an der Vorderkante (BA) übereinander drapiert sind, sodass sie sich überlappen.

4. Faservorformling nach Anspruch 1 oder 2, wobei die zweiten (5b; 5c) und dritten (7b; 7c) entbundenen Fasertexturen übereinander drapiert sind, sodass sie sich in einem Bereich überlappen, der von der Vorderkante (BA) verschieden ist.

5. Turbomaschinenschaufel aus Verbundmaterial mit Keramikmatrix, umfassend einen Faservorformling (1) nach einem der Ansprüche 1 bis 4 und eine Keramikmatrix, die in der Porosität des Faservorformlings vorhanden ist.

6. Verfahren zur Herstellung eines Faservorformlings (1) nach Anspruch 1 bis 4, umfassend zumindest:
- Weben eines Faserrohlings in einem einzelnen Stück, umfassend zumindest (i) Bilden des ersten stromabwärtigen Teils (P1) durch dreidimensionales Verweben der ersten Fasertextur (3; 3a; 3b; 3c) und (ii) Umsetzen einer Entbindung (DA) in der axialen Richtung (A) ab dem ersten stromabwärtigen Teil, um so die zweiten und dritten entbundenen Fasertexturen (5; 5a; 5b; 5c; 7; 7a; 7b; 7c) zu bilden, die sich von der ersten Fasertextur ausgehend erstrecken, und
- Bilden des Faservorformlings durch Positionieren des Rohlings um eine Form und Drapieren der zweiten und dritten entbundenen Fasertexturen übereinander, sodass sie sich überlappen.

7. Verfahren nach Anspruch 6, wobei die Verwebung des Rohlings ferner Umsetzen einer Entbindung (DR) in der radialen Richtung (R) ab dem Teil der Schaufel des ersten stromabwärtigen Teils (P1) umfasst, um die entbundenen Faserabschnitte (32; 34) zu bilden, welche die Faserverstärkung der Schaufelplattform definieren, wobei die zweiten und dritten entbundenen Fasertexturen (5; 5a; 5b; 5c; 7; 7a; 7b; 7c) in der radialen Richtung durch die entbundenen Faserabschnitte verlängert sind, und wobei ein Verteilerschaufelfaservorformling erhalten wird, nachdem der Rohling um die Form positioniert und die zweiten und dritten entbundenen Fasertexturen drapiert sind.

## Claims

1. A fibrous preform (1) of a hollow aerodynamic profile of a turbomachine vane or blade, the preform being made in one piece and having successively along an axial direction (A) a first downstream portion (P1) defining a trailing edge (BF) of the vane or blade, a second intermediate portion (P2) defining a pressure surface and a suction surface of the vane or blade and a third upstream portion (P3) defining a leading edge (BA) of the vane or blade,
the fibrous preform being **characterized in that** (i) the first downstream portion is formed by a first fibrous texture (3; 3a; 3b; 3c) having a three-dimensional weaving, **in that** (ii) the second intermediate portion and the third upstream portion are formed by second and third non-interlinked fibrous textures (5; 5a; 5b; 5c; 7; 7a; 7b; 7c) extending from the first fibrous texture, the second and third fibrous textures each having a three-dimensional weaving, and **in that** (iii) a portion (50) of the second or third non-interlinked fibrous texture is folded over the third or second non-interlinked fibrous texture so as to overlap it, this folded portion being obtained by three-dimensional weaving.

2. The fibrous preform (1) according to claim 1, wherein the fibrous preform is a turbine nozzle vane preform, in which the first downstream portion (P1) has a non-interlinking (DR) in a radial direction (R) from an airfoil portion forming two non-interlinked fibrous sections (32; 34) extending from the airfoil portion, said fibrous sections defining a fibrous reinforcement of a platform of the vane and in which the second and third non-interlinked fibrous textures (5; 5a; 5b; 5c; 7; 7a; 7b; 7c) are extended in the radial direction by the non-interlinked fibrous sections.

3. The fibrous preform according to claim 1 or 2, wherein the second (5; 5a) and third (7; 7a) non-interlinked fibrous textures are draped over each other so as to overlap each other at least on the leading edge (BA).

4. The fibrous preform according to claim 1 or 2, wherein the second (5b; 5c) and third (7b; 7c) non-interlinked fibrous textures are draped over each other so as to overlap each other in a distinct area of the leading edge (BA).

5. A turbomachine vane or blade made of ceramic-matrix composite material comprising a fibrous preform (1) according to any one of claims 1 to 4, and a ceramic matrix present in the porosity of the fibrous preform.

6. A method for manufacturing a fibrous preform (1) according to claim 1 to 4, comprising at least:
- the weaving of a fibrous blank in one piece comprising at least (i) the formation of the first downstream portion (P1) by three-dimensional weaving of the first fibrous texture (3; 3a; 3b; 3c), and (ii) the production of a non-interlinking (DA) in the axial direction (A) from the first downstream portion so as to form the second and third non-interlinked fibrous textures (5; 5a; 5b; 5c; 7; 7a; 7b; 7c) extending from the first fibrous texture, and
- the formation of the fibrous preform by positioning of the blank around a shape and draping of the second and third non-interlinked fibrous textures over each other so that they overlap each other.

7. The method according to claim 6, wherein the weaving of the blank further comprises the production of a non-interlinking (DR) in the radial direction (R) from the airfoil portion of the first downstream portion (P1) in order to form the non-interlinked fibrous sections (32; 34) defining the fibrous reinforcement of the platform of the vane, the second and third non-interlinked fibrous textures (5; 5a; 5b; 5c; 7; 7a; 7b; 7c) being extended in the radial direction by the non-interlinked fibrous sections, and wherein a fibrous nozzle vane preform is obtained after positioning of the blank around the shape and draping of the second and third non-interlinked fibrous textures.
